# EUROPEAN PATENT APPLICATION

(11) **EP 4 064 118 A1**
(43) Date of publication of application: **28.09.2022**
(21) Application number: 21164777.1
(22) Date of filing: 25.03.2021
(51) Int. Cl.: G06K 9/00, G06K 9/62

(54) **UTILITY VEHICLE AND CORRESPONDING APPARATUS, METHOD AND COMPUTER PROGRAM FOR A UTILITY VEHICLE**

(71) Applicant: Grazper Technologies ApS, 1265 Copenhagen K (DK)
(72) Inventor: HUNSBALLE, Jakob, 1265 Copenhagen K (DK); PIESTER, Lars Martin, 1265 Copenhagen K (DK); JAKOBSEN, Thomas, 1265 Copenhagen K (DK)
(74) Representative: 2SPL Patentanwälte PartG mbB

(57) **Abstract**

Various examples relate to a utility vehicle, and to a corresponding apparatus, method and computer program for a utility vehicle. The apparatus comprises at least one interface for obtaining video data from one or more cameras of the utility vehicle. The apparatus further comprises one or more processors. The one or more processors are configured to identify or re-identify one or more persons shown in the video data. The one or more processors are configured to determine an infraction of the one or more persons on one or more safety areas surrounding the utility vehicle based on the identification or re-identification of the one or more persons shown in the video data. The one or more processors are configured to provide at least one signal indicating the infraction of the one or more persons on the one or more safety areas to an output device.

## Description

### Field

Various examples relate to a utility vehicle, and to a corresponding apparatus, method and computer program for a utility vehicle.

### Background

The safety of vehicles is a field of research and development. For example, in personal vehicles, a camera-based detection of humans has been used previously for both navigation and safety enforcement. For example, in some modern vehicles, pedestrians may be automatically identified and visualized in a three-dimensional or top-down view. Additionally, warnings may be given, or the vehicle may brake automatically. In personal vehicles, e.g., sedans, the cameras are usually placed at a low height (e.g., at around 1 m), which makes it difficult to assess the distance from the vehicle to the actual three-dimensional position of the person using image-based methods. For example, in such a setup, a small person close up, and a large person far away, may appear visually similar.

Similar systems are used for construction machinery. Construction machinery is usually bigger than personal vehicles, so that the cameras are placed at a height that is slightly elevated compared to personal vehicles. However, the challenges with respect to image-based distance calculation remain. Additionally, such systems often only provide basic functionality, such as the detection of humans within a distance perimeter of the construction machinery.

### Summary

Various aspects of the present disclosure are based on the finding, that, in construction sites, different persons have different roles that give them permission to perform different tasks, and that different persons can be assumed to have a different level of awareness of the movement of construction machinery at the construction site. For example, an unskilled laborer may have a lower level of awareness than a foreman, and the foreman may have permission to perform other tasks than the unskilled laborer. Similarly, a person tasked with directing an operation of a construction vehicle may have a higher level of awareness of the movement of the construction vehicle than a laborer that is concerned with a different aspect of the construction site. Accordingly, the person tasked with directing the operation of a construction vehicle may be permitted within a safety area around the construction vehicle, while the laborer that is concerned with a different aspect of the construction site might not be permitted within the safety area. Therefore, a safety concept that is based on the detection of a person in a safety zone surrounding a utility vehicle, such as a construction vehicle, may take into account the identity of the person. For example, depending on the identity of the person, a presence of the person in a safety area surrounding the utility vehicle can be tolerated (e.g., if the foreman or the person tasked with directing the operation of the utility vehicle is detected in the safety area), or an infraction of the safety zone may be detected (e.g., if the unskilled laborer or the laborer concerned with a different aspect of the construction site is detected in the safety area).

Various aspects of the present disclosure relate to an apparatus for a utility vehicle. The apparatus comprises at least one interface for obtaining video data from one or more cameras of the utility vehicle. The apparatus further comprises one or more processors. The one or more processors are configured to identify or re-identify one or more persons shown in the video data. The one or more processors are configured to determine an infraction of the one or more persons on one or more safety areas surrounding the utility vehicle based on the identification or re-identification of the one or more persons shown in the video data. The one or more processors are configured to provide at least one signal indicating the infraction of the one or more persons on the one or more safety areas to an output device. By identifying or re-identifying the one or more persons, a distinction can be made between persons having different levels of awareness or persons having different permissions for performing tasks at the construction site.

The identification or re-identification of the one or more persons may be performed using one of several approaches. For example, the one or more processors may be configured to identify the one or more persons using facial recognition on the video data. When using facial recognition, a new person may be registered with the apparatus by providing one or more photos of the face of the person.

Alternatively, (visual) person re-identification may be used to re-identify the one or more persons. Visual person re-identification serves the purpose of distinguishing or re-identifying people, from their appearance alone, in contrast to identification that seeks to establish the absolute identity of a person. The one or more processors may be configured to re-identify the one or more persons using a machine-learning model that is trained for person re-identification. In this case, a new person may be registered with the apparatus by providing a so-called re-identification code representing the person.

Alternatively or additionally, external identifiers that are carried or worn by the one or more persons may be used to identify the one or more persons. For example, the one or more processors may be configured to identify the one or more persons by detecting a visual identifier, such as a badge with a machine-readable code, that is carried (e.g., worn) by the one or more persons in the video data. Alternatively or additionally, the one or more processors may be configured to identify the one or more persons by detecting an active beacon, such as an active radio beacon or active visual beacon, carried by the one or more persons. Passive visual identifiers, such as the visual identifier that is included in the badge or a visual identifier that is printed on a sticker that is attached to a safety helmet, are easy to implement, as they can be printed out and worn as part of badges, while active beacons are easier to detect, at the expense of additional hardware to be carried/worn by the respective persons. In contrast to active beacons, passive visual identifiers may convey their respective content without actively transmitting the content.

In general, machine-learning models for detecting persons in images are often trained to predict the position of a so-called "bounding box" around the persons, i.e., a rectangular box that, on the one hand, completely surrounds the respective person, and, on the other hand, is as small as possible. This bounding box may be used to determine the infraction of the one or more persons on the one or more safety areas, e.g., by determining an overlap between the bounding box and the one or more safety areas. To improve the accuracy of the detection, the outline of the one or more persons may be traced with a higher precision, e.g., using pose-estimation techniques. For example, the one or more processors may be configured to process, using a machine-learning model, the video data to determine pose information of one or more persons being shown in the video data. The machine-learning model may be trained to generate pose-estimation data based on video data. The one or more processors may be configured to determine the infraction of the one or more persons on the one or more safety areas based on the pose information of the one or more persons being shown in the video data. For example, instead of determining an infraction by detecting an overlap of a rectangular bounding box and the one or more safety areas, the actual outline of the limbs of the one or more persons may be used to determine the infraction.

In some examples, the pose information, and correspondingly the infraction on the one or more safety areas, may be calculated individually for every frame of the video data. Alternatively, the video data may be analyzed over multiple frames, and a progress of the respective pose may be considered when determining an infraction. For example, the machine-learning model may be trained to output the pose-estimation data with information about a progress of the pose of the one or more persons over time as shown over the course of a plurality of frames of the video data. The one or more processors may be configured to determine information on a predicted behavior of the one or more persons based on the progress of the pose of the one or more persons over time, and to determine the infraction of the one or more persons on the one or more safety areas based on the predicted behavior of the one or more persons. For example, the predicted behavior may show whether the respective person is moving towards or away from the one or more safety areas, or whether the respective person is showing inattentive or unsafe behavior.

Accordingly, the one or more processors may be configured to determine inattentive or unsafe behavior of the one or more persons based on the progress of the pose of the one or more persons over time, and to determine the infraction of the one or more safety areas based on the determined inattentive or unsafe behavior. In other words, the behavior of the one or more persons may be analyzed to estimate the level of awareness of the respective person or persons.

Additionally or alternatively, the one or more processors may be configured to estimate a path of the one or more persons relative to the one or more safety areas based on the progress of the pose of the one or more persons, and to determine the infraction on the one or more safety areas based on the estimated path of the one or more persons. For example, an infraction may be detected if the respective person moves towards the one of the one or more safety areas, and the infraction may be disregarded if the respective person moves away from the one or more safety areas.

For example, the one or more processors may be configured to generate one or more polygonal bounding regions around the one or more persons based on the pose of the one or more persons, and to determine the infraction of the pose of the one or more persons on the one or more safety areas based on the generated one or more polygonal bounding regions. As outlined above, polygonal bounding regions that follow the pose of the one or more persons may be more precise than rectangular bounding boxes.

On many construction sites, there are rules with respect to clothing to be worn. For example, on many construction sites, safety helmets, safety boots and/or safety vests are mandatory. Additionally, some items may be prohibited, such as personal backpacks. The one or more processors may be configured to detect, using a machine-learning model, whether the one or more persons carry at least one of a plurality of pre-defined items, with the machine-learning model being trained to detect the plurality of pre-defined items in the video data. The infraction of the one or more persons on the one or more safety areas may be determined further based on whether the one or more persons carry the at least one item. For example, the plurality of pre-defined items may comprise one or more items of safety clothing and/or one or more prohibited items. For example, persons carrying the mandatory safety gear may be permitted in the one or more safety areas, while persons without the mandatory safety gear or with prohibited items might not be permitted in the one or more safety areas.

In general, utility vehicles may move around the construction site. Depending on their movement, the one or more safety areas may change. For example, while the utility vehicle is moving forward, the one or more safety areas may be (mostly) in front of the vehicle. For example, the one or more processors may be configured to determine a future path of the utility vehicle, and to determine or adapt an extent of the one or more safety areas based on the future path of the utility vehicle.

There are various possible implementations of the signal indicating the infraction. For example, the at least one signal indicating the infraction of the one or more persons on the one or more safety areas may comprise a display signal and/or an audio signal, e.g., to illustrate the infraction on a display and/or to give an audible alarm signal.

For example, the at least one signal indicating the infraction of the one or more persons on the one or more safety areas may comprise a display signal comprising a visual representation of the one or more persons relative to the one or more safety areas. For example, the display signal may be provided to a display of the utility vehicle or a display of a user of the utility vehicle. For example, the visual representation may show the video data with an overlay showing the one or more safety areas and the (polygonal) bounding boxes outlining the one or more persons.

In various examples, the one or more processors may be configured to generate the display signal regardless of whether an infraction is being determined, with a person that infracts the one or more safety areas being highlighted in a different color than a person that does not infract the one or more safety areas within the display signal. This way, a person operating the utility vehicle can also be made aware of persons that are permitted within the safety area.

In some examples, the at least one signal indicating the infraction of the one or more persons on the one or more safety areas may comprise an audio warning signal. For example, the audio (warning) signal may be provided to a loudspeaker located within a cabin of the utility vehicle and/or to a loudspeaker that is suitable for warning the one or more persons outside the utility vehicle. For example, the audio signal that is provided to a loudspeaker located within the cabin may be used to warn the person operating the utility vehicle from within the vehicle, while the audio signal that is provided to a loudspeaker that is suitable for warning the one or more persons outside the utility vehicle may be used to warn the one or more persons, e.g., if an infraction is determined.

In various examples, the video data comprises a view on the one or more safety areas from above. For example, the view from above may facilitate detecting the infraction of the one or more persons on the one or more safety areas.

Various examples of the present disclosure relate to a corresponding method for a utility vehicle. The method comprises obtaining video data from one or more cameras of the utility vehicle. The method comprises identifying or re-identifying one or more persons shown in the video data. The method comprises determining an infraction of the one or more persons on one or more safety areas surrounding the utility vehicle based on the identification or re-identification of the one or more persons shown in the video data. The method comprises providing at least one signal indicating the infraction of the one or more persons on the one or more safety areas to an output device.

Various examples of the present disclosure relate to a computer program having a program code for performing the above method, when the computer program is executed on a computer, a processor, processing circuitry, or a programmable hardware component.

Various examples of the present disclosure relate to a utility vehicle comprising the apparatus presented above and/or being configured to perform the method presented above. The utility vehicle comprises one or more cameras. For example, the above apparatus may be integrated into the utility vehicle, or the method may be performed by the utility vehicle, to improve a safety of the operation of the utility vehicle. For example, the one or more cameras may be arranged at the top of a cabin of the utility vehicle, or the one or more cameras may be arranged at a platform extending from the top of the cabin of the utility vehicle. Both placements may be suitable for providing a view on the one or more safety areas from above.

### Brief description of the Figures

Some examples of apparatuses and/or methods will be described in the following by way of example only, and with reference to the accompanying figures, in which:
Fig. 1a shows a block diagram of an example of an apparatus for a utility vehicle;
Fig. 1b shows a schematic diagram of an example of a utility vehicle, in particular of a construction vehicle, comprising an apparatus;
Figs. 1c and 1d show flow charts of examples of a method for a utility vehicle;
Fig. 2 shows a schematic diagram of a system comprising two cameras, a processing component and an input output component;
Figs. 3a and 3b show examples of a placement of cameras on top of a vehicle;
Figs. 4a to 4c show examples of a visualization of a person that is detected in a safety area surrounding a utility vehicle; and
Figs. 5a to 5h show schematic diagrams of examples of static poses or signal poses.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various examples of the present disclosure generally relate to utility vehicles, such as construction vehicles, and in particular to a concept for automatic utility vehicle safety enforcement or to a concept for controlling a utility vehicle.

In the following, various examples are given of an apparatus for a utility vehicle, of a utility vehicle comprising such an apparatus, and of corresponding methods and computer programs. The following examples are based on an automatic image-based detection of humans in the vicinity of utility vehicles for safety enforcement or for controlling the utility vehicle.

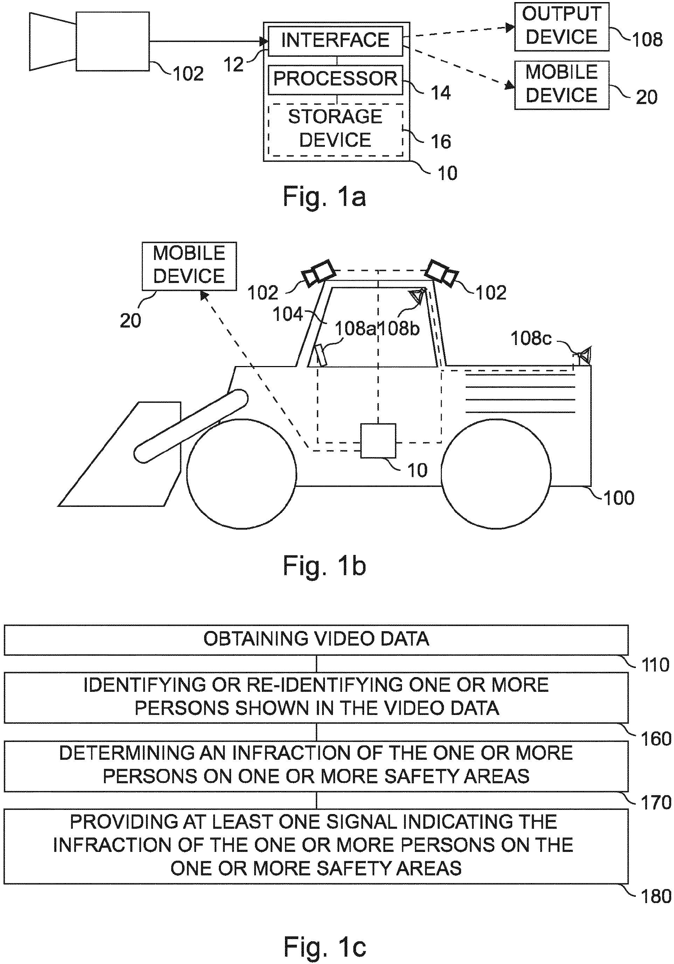

Fig. 1a shows a block diagram of an example of an apparatus 10 for a utility vehicle 100. The apparatus 10 comprises at least one interface 12 and one or more processors 14. Optionally, the apparatus 10 further comprises one or more storage devices 16. The one or more processors are 14 are coupled to the at least one interface 12 and to the optional one or more storage devices 16. In general, the functionality of the apparatus is provided by the one or more processors 14, with the help of the at least one interface 12 (for exchanging information, e.g., with one or more cameras 102 of the utility vehicle, with one or more output devices 108 of the utility vehicle, and/or with one or more mobile devices 20, as shown in Fig. 1b), and/or with the help of the one or more storage devices 16 (for storing information). For example, the at least one interface may be suitable for, and or configured to, obtaining/obtain video data from the one or more cameras 102 of the utility vehicle.

Fig. 1b shows a schematic diagram of an example of a utility vehicle 100, in particular of a construction vehicle, comprising the apparatus 10. The construction vehicle shown in Fig. 1b is a front-loader. However, the same concept may be used with other utility vehicles or construction vehicles as well. For example, the utility vehicle may be one of an excavator, a compactor, a bulldozer, a grader, a crane, a loader, a truck, a forklift, a road sweeper, a tractor, a combine etc. For example, the utility vehicle may be a land vehicle. However, the same concept may be applied to other devices as well, such as a robot, e.g., a stationary robot (e.g., a stationary robot for use in a manufacturing environment) or mobile or vehicular robots that are capable of moving. Thus, a robot may comprise the apparatus 10 and the one or more cameras 102. As pointed out above, the utility vehicle 100 comprises the one or more cameras 102, which are arranged at the top of the cabin 104 of the front-loader shown in Fig. 1b. The utility vehicle may comprise one or more additional components, such as one or more output devices 108. For example, the utility vehicle may comprise one or more of a display 108a, a loudspeaker 108b that is arranged in the cabin 104, and a loudspeaker 108c that is arranged outside the cabin 104.

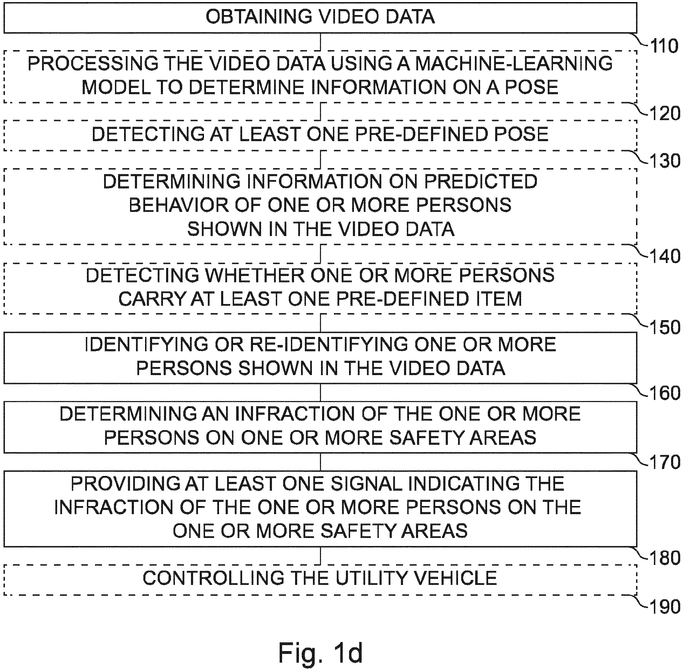

In general, various aspects of the utility vehicle 100 are controlled by the apparatus 10. The functionality provided by the apparatus 10, in turn, may also be expressed with respect to a corresponding method, which is introduced in connection with Figs. 1c and/or 1d. For example, the one or more processors 14 may be configured to perform the method of Figs. 1c and/or Id, with the help of the at least one interface 12 (for exchanging information) and/or the optional one or more storage devices 16 (for storing information).

Figs. 1c and 1d show flow charts of examples of the corresponding (computer-implemented) method for the utility vehicle 100. The method comprises obtaining 110 video data from one or more cameras of the utility vehicle. The method comprises identifying 160 or re-identifying one or more persons shown in the video data. The method further comprises determining 170 an infraction of the one or more persons on one or more safety areas surrounding the utility vehicle based on the identification or re-identification of the one or more persons shown in the video data. The method comprises providing 180 at least one signal indicating the infraction of the one or more persons on the one or more safety areas to an output device. The method may comprise one or more additional optional features, as shown in Fig. Id, which are introduced in connection with the apparatus 10 and/or the utility vehicle 100.

The following description relates to the apparatus 10, the utility vehicle 100, the corresponding method of Figs. 1c and/or 1d and to a corresponding computer-program. Features that are introduced in connection with the apparatus 10 and/or the utility vehicle 100 may likewise be applied to the corresponding method and computer program.

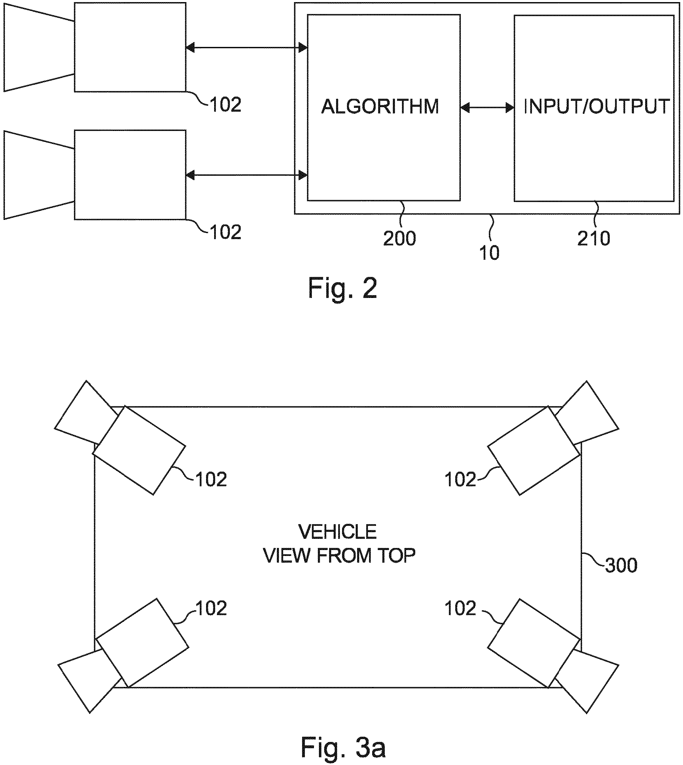

Examples of the present disclosure relate to the analysis of the video data that is provided by the one or more cameras of the utility vehicle. Fig. 2 shows a schematic diagram of a system comprising two cameras 102, a processing component 200 and an input/output component 210. For example, the processing component 200 and/or the input/output component 210 may be implemented by the apparatus 10 of Figs. 1a and 1b, e.g. in combination with the output device 108(a-c) for the input/output component 210. Fig. 2 shows a high-level abstraction of the proposed concept, where the video data is generated by the one or more cameras 102, then analyzed by one or more algorithms 200, which may use a deep network process that can be implemented using one or more machine-learning models, and then output via an input/output component 210, e.g., as visualization, auditory signals, or as control signals for controlling an aspect of the utility vehicle.

Thus, the one or more processors 14 are configured to obtain the video data from the one or more cameras 102 of the vehicle (as shown in Figs. 1a and 1b). In some cases, the utility vehicle may comprise a single camera, e.g., a single 2D camera or a single depth camera. However, in some examples, the vehicle may comprise a plurality of cameras (i.e., two or more cameras), which may cover a plurality of areas surrounding the utility vehicle. In some examples, the plurality of cameras may cover a plurality of non-overlapping areas surrounding the utility vehicle. However, in some examples, the plurality of areas surrounding the utility vehicle may partially overlap. For example, at least the area or areas of interest in the analysis of the video data may be covered by two or more of the cameras, e.g., to enable or facilitate three-dimensional pose estimation, and/or to avoid a person being occluded by an obj ect.

In some examples, the video data is obtained from two or more cameras. For example, the fields of view of the video data of the two or more cameras may be "unwrapped" to form a single, unified top-down view of the vehicle's surroundings. Alternatively, the video data obtained from the cameras may be processed (e.g., using a machine-learning model) individually rather than being "unwrapped" in a unified view (which is then processed). For example, the video data, e.g., the unified view or the separate views, may be recorded for later use.

In many cases, utility vehicles, such as construction vehicles, are tall vehicles. For example, trucks, cranes, compactors etc. can be three meters tall (or even taller), with the cabin often being placed at heights of two meters or more. This height above ground may be used to gain an overview of the areas surrounding the utility vehicle, which may further help in avoiding the occlusions of persons. Furthermore, a high placement of cameras facilitates getting an overview of an exact placement of persons (and objects) in the vicinity of the utility vehicle. Thus, the one or more cameras may be placed at the top of the vehicle, e.g., at or above the top of the cabin 104 of the utility vehicle. For example, two to four (or more than four, or even just one) cameras may be placed at each of the "corners" of the vehicle at a high position (e.g., on top of the roof of the cabin of an operator of the utility vehicle). While the concept can be implemented using a single camera, the view of the camera may be obstructed on the construction site.

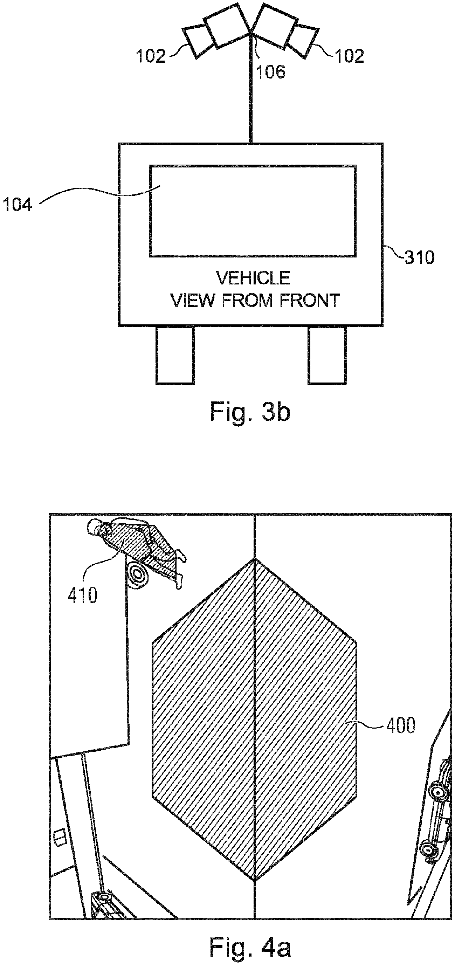

Figs. 3a and 3b show examples of a placement of cameras 102 on top of utility vehicles 300; 310. Fig. 3a shows a two-dimensional drawing of a vehicle from above, with cameras 102 being placed at the "corners" of the vehicle. In Fig. 3a, four cameras 102 are placed at the corners of the top of the cabin 104 of the utility vehicle 300. Fig. 3b shows a two-dimensional drawing of a front-view of a vehicle. In Fig. 3b, the cameras 102 are placed at a high position (to enable easy overview and accurate positioning of humans), e.g., arranged at a platform 106 extending from the top of the cabin of the utility vehicle. For example, a retractable pole may be raised from the top of the cabin 104 to form the platform 106. For example, the platform 106 may be at least one meter above a roof of the cabin 104. Furthermore, the one or more cameras may be placed at a height of at least two meters (or at least three meters) above ground. Consequently, the video data may comprise a view from above, e.g., a view on the one or more persons from above, or a view on one or more safety areas surrounding the utility vehicle from above. Together, the views from the cameras may cover the area surrounding the utility vehicle, e.g., the one or more safety areas.

In various examples of the present disclosure, the video data is analyzed to identify a pose of the person or persons being shown in the video data. For example, this analysis may be performed with the help of a machine-learning model (further denoted "pose-estimation machine-learning model") being trained to generate pose-estimation data based on video data. For example, the pose-estimation machine-learning model may be trained to perform pose-estimation on the video data. In other words, the one or more processors may be configured to process, using the pose-estimation machine-learning model, the video data to determine pose information of the one or more persons being shown in the video data. Correspondingly, the method may comprise processing 120 the video data using the pose-estimation machine-learning model to determine the pose information.

In general, the pose information identifies a (body) pose taken by the one or more persons shown in the video data. In this context, the pose of the persons may be based on, or formed by, the relative positions and angles of the limbs of the one or more persons. For example, each of the one or more persons may be represented by a so-called pose-estimation skeleton, which comprises a plurality of joints and a plurality of limbs. However, the terms "joints" and "limbs" of the pose-estimation skeleton are used in an abstract sense and do not necessarily mean the same as the terms being used in medicine. The pose-estimation skeleton may be a graph, with the joints being the vertices of the graphs and the limbs being the edges of the graph. In a pose-estimation skeleton, the joints are interconnected by the limbs. While some of the limbs being used to construct pose-estimation skeletons correspond to their biological counterparts, such as "upper arm", "lower arm", "thigh" (i.e., upper leg) and "shank" (i.e., lower leg), the pose-estimation skeleton may comprise some limbs that are not considered limbs in a biological sense, such as a limb representing the spine, a limb connecting the shoulder joints, or a limb connecting the hip joints. In effect, the limbs connect the joints, similar to the edges of the graph that connect the vertices. For example, limbs may be rotated relative to each other at the joints connecting the respective limbs. For example, the pose-estimation machine-learning model may be trained to output a pose-estimation skeleton (e.g., as a graph) based on the video data.

In some examples, the pose-estimation machine-learning model may be trained to output two-dimensional pose-estimation data. In other words, the pose information of the one or more persons may be based on or comprise two-dimensional pose-estimation data on the pose of the one or more persons. In this case, the pose-estimation data may comprise a pose-estimation skeleton, where the joints of the skeleton are defined in two-dimensional space, e.g., in a coordinate system that corresponds to the coordinate system of frames of the video data. For example, the video data may be used as an input for the pose-estimation machine-learning model, and the two-dimensional pose-estimation data may be output by the pose-estimation machine-learning model. Various well-known machine-learning models may be used for the task, such as DeepPose or Deep High-Resolution Representation Learning for Human Pose Estimation (HRNet). Such two-dimensional pose-estimation data may suffice for the following processing of the pose information.

In some examples, however, three-dimensional pose-estimation data may be used, i.e., the pose information of the one or more persons may comprise or be based on three-dimensional pose-estimation data on the pose of the one or more persons, and/or the positions of the joints of the pose-estimation skeleton may be defined in a three-dimensional coordinate system. For example, the pose-estimation machine-learning model may be trained to perform three-dimensional pose-estimation. In some examples, the pose-estimation machine-learning model may be trained to perform three-dimensional pose-estimation based on video data from a plurality of cameras that show the one or more persons from a plurality of angles of observation. For example, the plurality of angles of observation may show the movement and pose(s) of the one or more persons in a region of space, as recorded by the plurality of cameras being placed around the region of space. Alternatively, the pose-estimation machine-learning model may be trained to perform three-dimensional pose-estimation based on video data from a single camera. In this case, the video data from the single camera may suffice to determine the three-dimensional pose, e.g., when only video data from a single camera is available, or if the field of view of one or more additional cameras is obstructed.

Alternatively, the three-dimensional pose-estimation data may be generated based on the two-dimensional pose-estimation data. The one or more processors may be configured to post-process the two-dimensional pose-estimation data to generate the three-dimensional pose-estimation data, e.g., using a further machine-learning model, or using triangulation on multiple time-synchronized samples of pose-estimation data that are based on different angles of observation.

In general, the video data comprises a plurality of frames of video data. In some examples, the pose-estimation machine-learning model may be trained to generate and output the pose-estimation data separately for each frame of the plurality of frames of video data. Alternatively, the pose-estimation machine-learning model may be trained to generate the pose-estimation data across frames, e.g., by tracking the joints of the pose-estimation skeleton across frames. This may be used to track a progress of the pose across multiple frames of the video data. Consequently, the pose-estimation machine-learning model may be trained to output the pose-estimation data with information about a progress of the pose of the person over time as shown over the course of a plurality of frames, and the pose information may comprise the information about the progress of the pose of the person over time as shown over the course of a plurality of frames of the video data. For example, the information about the progress of the pose of the person over time may comprise, or be used to generate, an animation of the progress of the pose. For example, the information on the progress of the pose, e.g., the animation, may be further processed by another machine-learning model / deep network to provide detailed information about the movement of the person over time. For example, the pose information may comprise, for each frame or for a subset of the frames of video data, two- or three-dimensional pose estimation data.

In some cases, the video data may show multiple persons. In this case, the pose-estimation machine-learning model may output the pose-estimation data separately for each person. For example, the output of the pose-estimation machine-learning model may enumerate the persons recognized and output the pose-estimation data per person recognized. Accordingly, the pose-estimation machine-learning model may also be trained to perform person segmentation, in order to separate multiple persons visible in the video data. For example, the pose-estimation machine-learning model may be trained to distinguish persons using a location of the persons, a visual appearance of the person, a body pose of the persons, limb lengths of the respective persons or using person re-identification. In some cases, however, the segmentation may be performed separately based on the output of the pose-estimation machine-learning model, e.g., by a separate machine-learning model or by a segmentation algorithm. For example, the one or more processors may be configured to, if the video data shows multiple persons, segment the pose-estimation data of the persons based on the output of the pose-estimation machine-learning model.

According to a first aspect of the present disclosure, the video data is used to detect a presence of the one or more persons in one or more safety areas surrounding the utility vehicle. For example, video frames from one or multiple 2D cameras may be obtained, human body parts may be detected within the video data using deep neural networks, and a warning may be generated if a human is inside the one or more safety areas, i.e., too close to a moving operating construction vehicle.

For example, the one or more processors may be configured to determine an infraction of the one or more persons on one or more safety areas surrounding the utility vehicle. In general, the one or more safety areas may be one or more "hazardous" areas surrounding the utility vehicle. In other words, the one or more safety areas may be checked for infractions because the utility vehicle may pose a hazard to a person being present within the one or more safety areas. For example, the one or more safety areas may be potentially hazardous in case the utility vehicle moves (using its wheels), or in case a component of the utility vehicle moves (e.g., in case a platform of an excavator rotates relative to the frame of the excavator, or in case the excavator shovel is moved). Thus, the one or more safety areas of surrounding the utility vehicle may be hazardous due to a potential movement of the utility vehicle.

In some examples, a location of the one or more safety areas may be of a static size and at a static location relative to the utility vehicle. In some examples, however, the one or more safety areas may be changed. For example, the one or more safety areas may be defined by an operator of the utility vehicle, e.g., via a touch-screen display 108a of the utility vehicle (as shown in Fig. 1b). The operator of the utility vehicle may be aware of the potential movements of the utility vehicle, and thus adapt the one or more safety areas accordingly. Alternatively or additionally, the one or more safety areas may be adapted automatically. For example, the one or more processors may be configured to automatically adapt the extent (i.e., the size and location relative to the utility vehicle) of the one or more safety areas. As mentioned above, the safety areas are designed to cover hazardous areas around the utility vehicle, which are often due to potential movement of at least a component of the utility vehicle. Therefore, the one or more processors may be configured to determine a future path of the utility vehicle, and to determine the extent of the one or more safety areas based on the future path of the utility vehicle. For example, the one or more processors may be configured to determine the future path of the utility vehicle based on a current motion and a steering angle of the utility vehicle, or based on a path prediction of a rear-view camera system. For example, the extent of the one or more safety areas may cover an area surrounding the utility vehicle that the utility vehicle can potentially reach within few seconds by driving on the predicted future path, e.g., for five seconds at 5 kilometers per hour.

In the context of the present disclosure, the term "safety area" may designate a physical location surrounding the vehicle. However, the "safety area" may also designate at least a portion of the field of view (or fields of view) shown in the video data. For example, the one or more safety areas surrounding the utility vehicle may be shown in one or more portions of the field(s) of view shown in the video data. If the video data shows the one or more safety areas from above, an intersection between the person and the one or more safety areas shown in the video data may indicate the person being within the safety area. The higher the camera is placed, the better the match is between a person intersecting with the one or more safety areas in the video data and the person entering the one or more safety areas at the physical location of the one or more safety areas.

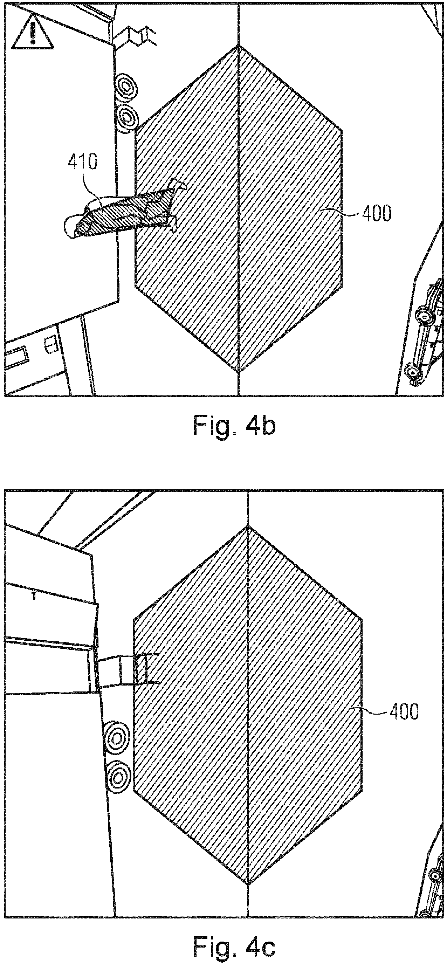

In Figs. 4a to 4c, a visualization of the concept is shown. Figs. 4a to 4c show examples of a visualization of a person 410 that is detected in a safety area 400 surrounding a utility vehicle. In Figs. 4a to 4c, the aforementioned "unified view" is used, in which an image is composed from the video data of multiple (in this case two) cameras. In the unified view of the video data, a user-defined area 400 indicating the one or more safety areas (which may be centered around the middle, e.g., using a diamond shape as default shape) may define the hazardous area in which a person might not be permitted. In Fig. 4a, a person, outlined by a polygonal (non-rectangular) bounding box is shown walking towards the outline of the two safety areas forming the diamond shape 400. In Fig. 4a, the person is outside the safety areas, and the polygonal bounding region of the person may thus be shown in a first color (e.g., green). In Fig. 4b, the person 410 is inside the safety area (with the feet of the person 410) being shown inside the safety area 400. In this case, the polygonal bounding region may be shown in a second color (e.g., red). In Fig. 4c, the person has left the field of view.

In various examples, different levels of safety areas may be used. For example, the one or more safety areas may differ with respect to how hazardous the safety areas are, and which types of persons or which kind of behavior is permitted within the safety areas. For example, several safety areas with increasing level of hazard can be defined, and warning signal with increasing degrees of intensity may be provided when an infraction occurs.

The infraction of the one or more persons on the one or more safety areas is determined based on the video data. For example, in a simple example, a machine-learning model that is trained for person detection may be used to generate rectangular bounding boxes around persons shown in the video data, or to output coordinates of the persons shown in the video data. If the rectangular bounding boxes or the coordinates intersect with the one or more safety areas shown in the video data, an infraction of the one or more persons on the one or more safety areas may be detected.

As shown in Figs. 4a and 4b, instead of simple human detection (coordinate point or bounding-box), more detailed body poses can be detected. In other words, body pose analysis may be performed. This makes it possible to do more accurate detection with respect to the one or more safety areas. For example, the pose information, and in particular the pose-estimation data, may be used to determine the infraction of the one or more persons on the one or more safety areas. In other words, the one or more processors may be configured to determine the infraction of the one or more persons on the one or more safety areas based on the pose information of the one or more persons being shown in the video data. For example, instead of using a rectangular bounding box encompassing vast amounts of empty space in addition to the respective person, the bounding box may be re-drawn based on the position of the joints (and limbs) of the pose-estimation data generated by the pose-estimation machine-learning model. For example, the one or more processors may be configured to generate one or more polygonal bounding regions around the one or more persons based on the pose of the one or more persons. For example, the one or more polygonal bounding regions may be non-rectangular (or at least not necessarily rectangular) but follow the limbs and joints of the pose-estimation skeleton representing the respective persons outlined by the bounding boxes. For example, as shown in Figs. 4a and 4b, a convex hull of the limbs (i.e., the smallest encompassing convex polygon) may be used to generate the one or more polygonal bounding regions. The one or more processors may be configured to determine the infraction of the pose of the one or more persons on the one or more safety areas based on the generated one or more polygonal bounding regions. For example, if the polygonal bounding regions intersect with the one or more safety areas shown in the video data, an infraction of the one or more persons on the one or more safety areas may be detected.

Alternatively or additionally, the feet of the one or more persons may be identified based on the respective pose-estimation skeleton and/or skeletons, and an infraction may be determined if the feet of the one or more persons intersect with the one or more safety areas shown in the video data. In other words, the one or more processors may be configured to determine the infraction of the pose of the one or more persons on the one or more safety areas based on an intersection of feet of one or more pose-estimation skeletons of the one or more persons with the one or more safety areas shown in the video data.

In some examples, not only a static pose or poses taken by the one or more persons may be considered. As video data is being analyzed, the pose or poses of the one or more persons may be tracked across multiple frames of video data, and a progress of the pose of the one or more persons may be determined. This progress of the pose may be used to deduce the behavior of the one or more persons. For example, instead of determining the infraction on the one or more safety areas based on a pose that is shown in a single frame, the behavior may be analyzed to determine, for example, whether the infraction is only temporary (as the respective person is about to exit the one or more safety areas), or whether there is an infraction at all, as the hazardous nature of the one or more safety areas may be dependent on whether the respective person is attentive or not. By identifying body parts using an image-based machine learning algorithm, e.g., a deep network, it is possible to extract behavioral information about the persons visible in the image. The use the additional image recognition makes it possible to infer human behavior for added accuracy, e.g., to distinguish persons running away of lying still.

For example, the one or more processors may be configured to estimate a path of the one or more persons relative to the one or more safety areas based on the progress of the pose of the one or more persons. For example, the pose taken by the respective person may indicate an orientation of the person (e.g., based on a gaze of the person), and the progress of the pose may indicate whether the person is walking (at all). Based on the orientation and based on whether the person is walking, the path of the respective person may be estimated. The one or more processors may be configured to determine the infraction on the one or more safety areas based on the estimated path of the one or more persons. For example, if the estimated path of a person indicates that the person is about to (e.g., within the next 1 to 2 seconds) leave the one or more safety areas, the infraction may be disregarded. If the estimated path of the person indicates that the person is likely to remain the one or more safety areas, the one or more safety areas may be deemed infracted.

In addition, or alternatively, the behavior of the one or more persons may be analyzed with respect to the attentiveness of the one or more persons. For example, the one or more processors may be configured to determine information on a predicted behavior of the one or more persons based on the progress of the pose of the one or more persons over time. Accordingly, the method may comprise determining 140 the information on a predicted behavior of the one or more persons based on the progress of the pose of the one or more persons over time. For example, the infraction of the one or more persons on the one or more safety areas may be determined based on the predicted behavior of the one or more persons. Using the analysis of the body pose or movement of the one or more persons, it is possible to identify for example non-attentive persons (e.g., by analyzing gaze direction), or persons participating in unsafe activities, or persons exhibiting unwanted behaviors such as sitting, lying or similar. For example, the one or more processors may be configured to determine inattentive or unsafe behavior of the one or more persons based on the progress of the pose of the one or more persons over time. For example, the one or more processors may be configured to compare the pose of the one or more persons and/or the progress of the pose of the one or more persons to a plurality of poses associated with inattentive or unsafe behavior, such as eating, placing a telephone call, looking at a mobile device, looking away from the utility vehicle, sitting in a safety area, smoking etc. The one or more processors may be configured to determine the infraction of the one or more safety areas based on the determined inattentive or unsafe behavior. For example, a person may be deemed to infract on the one or more safety areas if they show inattentive or unsafe behavior.

The use of additional image recognition also makes it possible to infer additional features for policy enforcement. In various examples of the proposed concept, in addition to the one or more persons, it is possible to simultaneously identify objects in the scene. For example, image recognition and classification (e.g., using a classification machine-learning model) may be used to identify objects shown in the video data, e.g., freely placed obstacles or objects in the process of being handled by the one or more persons. The one or more processors may be configured to detect, using a further machine-learning model (further denoted "object-detection machine-learning model"), whether the one or more persons carry at least one of a plurality of pre-defined items. The method may comprise detecting whether the one or more persons carry at least one of a plurality of pre-defined items. For example, the video data may be analyzed to detect safety helmets, high-visibility safety vests, mobile phones, shovels or other equipment etc. This feature may be used for policy enforcement on the construction site. For example, on construction sites, the use of hard hats/helmets, steel toe boots, safety vests etc. may be mandatory. In particular, by further analyzing the image using the object-detection machine-learning model, e.g., a deep network, in combination with the previously described identification of body parts, it is possible to detect whether people are wearing required construction site safety items, for example hard hats and high visibility vests. It is also possible to detect whether a person is using prohibited items such as mobile phone, eating, drinking or similar. Accordingly, the plurality of pre-defined items may comprise one or more items of safety clothing, such as, a safety helmet (i.e., a "hard hat"), a safety vest or steel toe boots, and/or one or more prohibited items, such as a mobile phone, a cigarette, a personal backpack etc. The one or more processors may be configured to determine the infraction of the one or more persons on the one or more safety areas further based on whether the one or more persons carry the at least one item. For example, a person of the one or more persons may be deemed to infract on the one or more safety areas if the person lacks one or more mandatory items of safety clothing, e.g., if the person does not wear a safety hat, a safety vest, or steel toe boots. If the person wears all of the mandatory items of safety clothing, an infraction of the person on the one or more safety areas may be disregarded. Similarly, if a person of the one or more persons is found to carry a prohibited item, the person may be deemed to infract on the one or more safety areas, even if the respective person otherwise appears attentive and/or is equipped with the mandatory pieces of safety clothing.

In various examples, the proposed concept is used with a subcomponent that is used to identify or re-identify the one or more persons shown in the video data. This may change the behavior of the safety system to match a specially assigned role of the person in the video data. For example, a foreman or an operator of the utility vehicle may be allowed inside the safety area, while an unskilled laborer might not. For example, if the operator of the utility vehicle acts as a special "marshaller" outside the utility vehicle, the operator might be allowed to be positioned inside a subregion of the one or more safety areas. The identification or re-identification of the person can use image-based techniques such as facial recognition or re-id, QR (Quick Response) codes or similar, or other types of non-image-based identification techniques, such as radio beacons (e.g., Bluetooth beacons) or active visual beacons (e.g., infrared transmitters/receivers. Accordingly, the one or more processors are configured to identify or re-identify one or more persons shown in the video data, and to determine the infraction of the one or more persons on the one or more safety areas based on the identification or re-identification of the one or more persons shown in the video data. In other words, whether or not an infraction is determined may be based on the identity of the respective person. The determination of the infraction may be made conditional on the identity of the respective person. For example, if two persons stand side by side in the one or more safety areas, one of them might infract on the one or more safety areas, and the other might not.

There are various concepts that enable an identification or re-identification of the one or more persons. For example, the one or more processors may be configured to identify the one or more persons using facial recognition on the video data. For example, a machine-learning model (further denoted "facial recognition machine-learning model") may be trained to perform various aspects of the facial recognition. For example, the facial recognition machine-learning model may be trained to perform face detection on the video data, and to extract features of the detected face(s). The one or more processors may be configured to compare the extracted features of the detected face(s) with features that are stored in a face-recognition database. For example, the features of a person that is allowed in the one or more safety areas may be stored within the face-recognition database. Optionally, the features of a person that is explicitly not allowed in the one or more safety area may also be stored within the face-recognition database. If a person that is standing in one of the one or more safety areas is found in the face-recognition database, and the person is allowed in the one or more safety areas, no infraction of the one or more safety areas may be found (i.e., the infraction may be disregarded). If a person that is standing in one of the one or more safety areas is found in the face-recognition database, and the person is explicitly not allowed in the one or more safety areas, or if the person is not found in the face-recognition database, an infraction may be determined.

Alternatively (or additionally), person re-identification may be used. In other words, the one or more processors may be configured to re-identify the one or more persons using a machine-learning model that is trained for person re-identification (further denoted "person re-identification machine-learning model"). Visual person re-identification systems serve the purpose of distinguishing or re-identifying people, from their appearance alone, in contrast to identification systems that seek to establish the absolute identity of a person (usually from facial features). In this context, the term person re-identification indicates, that a person is re-identified, i.e., that a person that has been recorded earlier, is recorded again and matched to the previous recording.

In various examples, the re-identification is based on so-called re-identification codes that are generated from visual data, such as video data. A re-identification code of a person represents the person and should be similar for different images of a person. A person's re-identification code may be compared with other re-identification codes of persons. If a match is found between a first and a second re-identification code (i.e., if a difference between the re-identification codes is smaller than a threshold), the first and second re-identification codes may be deemed to represent the same person. To perform the re-identification, two components are used - a component for generating re-identification codes, and a component for evaluating these re-identification codes, to perform the actual re-identification. In some examples, the facial recognition mentioned above may be implemented using person re-identification. For example, the feature extraction may be performed by generating a re-identification code, which can be compared to other re-identification codes that are stored in the facial recognition database.

A person may be added to the re-identification system by generating a re-identification code based on an image of the person, and storing the generated code on the one or more storage devices. The person re-identification machine-learning model may be trained to output, for each person shown in the video data, a corresponding re-identification code. The one or more processors may be configured to generate one or more re-identification codes of the one or more persons shown in the video data using the re-identification machine-learning model, and to compare the stored re-identification code or codes with the one or more re-identification codes of the one or more persons. If a match is found, the person shown in the video data may be re-identified. Depending on whether the person is known to be allowed in the one or more safety areas or explicitly not allowed in the one or more safety areas, an infraction may be determined (or not). If a person shown in the video data cannot be re-identified, and the person is found inside a safety area, an infraction may be determined.

As an alternative or in addition to facial recognition and/or re-identification, a secondary identifier may be used to identify the one or more persons. For example, a special marker may be placed on the safety helmet of the respective person (e.g., instead of facial recognition). With the help of the marker, the one or more persons may be uniquely identified in the scene. Using such markers, special designated helpers or similar may be allowed to be present in some of the one or more safety areas.

In the following, two general types of secondary identifiers are introduced - passive visual identifiers, and active beacons. For example, the one or more processors may be configured to identify the one or more persons by detecting a (passive) visual identifier carried by the one or more persons in the video data. For example, the visual identifier may be placed on a vest or a helmet of the one or more persons, or be worn as part of a badge of the one or more persons. For example, the passive visual identifier may show a computer-readable code, such as a Quick Response (QR) or other two-dimensional visual code. The one or more processors may be configured to detect visual identifiers in the video data, and to identify the one or more persons based on the detected visual identifiers. For example, an identity and/or a permission of a person may be encoded into the visual identifier of the person. Alternatively, the visual identifier may yield a code, which may be looked up in a database (by the one or more processors).

Alternatively or additionally, active beacons may be used to identify the one or more persons. For example, the one or more processors may be configured to identify the one or more persons by detecting an active beacon, such as an active radio beacon (e.g., a Bluetooth beacon) or an active visual beacon (e.g., an active infrared transmitter) carried by the one or more persons. For example, the one or more processors may be configured to detect emissions of the active visual beacon in the video data, or to use a visual sensor, such as an infrared sensor, to detect the active visual beacon. Similarly, the one or more processors may be configured to use a radio receiver, which may be connected via the at least one interface, to detect transmissions of the active radio beacon. For example, an identity and/or a permission of a person may be encoded into a code transmitted by the active beacon, e.g., the active visual beacon or the active radio beacon, or the transmission of the active beacon may yield a code, such as a Media Access Control code in case of a Bluetooth beacon, which may be looked up in a database (by the one or more processors).

In various examples, the one or more processors are configured to provide at least one signal indicating the infraction of the one or more persons on the one or more safety areas to an output device, e.g., via the at least one interface. For example, as outlined in connection with Fig. 1b, the output device may be a display 108a, a loudspeaker 108b for outputting sound in the cabin, or a loudspeaker 108c for outputting sound outside the utility vehicle. Correspondingly, the at least one signal indicating the infraction of the one or more persons on the one or more safety areas may comprise a display signal and/or an audio signal. Alternatively, the output device may be the mobile device 20, which may be coupled with the utility vehicle via a wireless connection. In this case, an audio signal and/or a display signal may be used as well.

For example, as shown in connection with Figs. 4a to 4b, the at least one signal indicating the infraction of the one or more persons on the one or more safety areas may comprise a display signal comprising a visual representation of the one or more persons relative to the one or more safety areas. As shown in Figs. 4a and 4b, an outline 400 of the one or more safety areas and an outline 410 of the detected one or more persons may be shown as part of the visual representation of the one or more persons relative to the one or more safety areas. For example, the video data, e.g., as unified view or separately for each of the one or more cameras, may or may not be visualized for the operator. Accordingly, the outlines may be overlaid over the video data in the visual representation, or abstract representations of the one or more persons and of the one or more safety areas may be shown. As explained in connection with Figs. 4a to 4c, the one or more processors may be configured to generate the display signal regardless of whether an infraction is being determined, with a person that infracts the one or more safety areas being highlighted in a different color (e.g., red, as referenced in connection with Fig. 4b) than a person that does not infract the one or more safety areas within the display signal (e.g., green, as referenced in connection with Fig. 4a). The display signal may be provided to a display of the utility vehicle, e.g., the display 108a, or a display of a user of the utility vehicle, e.g., a display of the mobile device 20.

Additionally or alternatively, an audio warning signal may be provided for the operator of the utility vehicle and/or for the one or more persons. For example, the at least one signal indicating the infraction of the one or more persons on the one or more safety areas may comprise an audio warning signal. For example, the audio signal may be provided to the loudspeaker 108b located within the cabin 104 of the utility vehicle, to a loudspeaker 108c that is suitable for warning the one or more persons outside the utility vehicle, or to a loudspeaker of the mobile device 20 (as shown in Fig. 1b).

In some examples, the one or more processors may be configured to control the vehicle based on the vehicle, e.g., to enable "auto-break" or automatic shutdown in case of impending danger. In other words, the one or more processors may be configured to halt a progress of the utility vehicle if an infraction is detected.

In the previously introduced examples, pose-estimation is primarily used to determine an infraction of a person on a safety area. According to a second aspect of the present disclosure, the pose-estimation functionality may be used to control the utility vehicle, e.g., in addition to the detection of infractions on the one or more safety areas. For example, specific body poses may be used by people outside the vehicle to control the behavior of the vehicle. Accordingly, the one or more processors may be configured to detect at least one pre-defined pose based on the pose information of the person, and to control the utility vehicle based on the detected at least one pre-defined pose. In this case, the operator of the utility vehicle may stand outside the utility vehicle and control the utility vehicle from the outside.

For example, a system of signals may be adapted that is similar to the system aircraft marshallers use on the runway. In this case, the operator of the utility vehicle may be a "marshaller" of the utility vehicle. As a marshaller, the operator may be permitted inside the one or more safety areas of the utility vehicle. An infraction of the operator on the one or more safety areas may thus be disregarded (i.e., the infraction might not be detected). However, it may be prudent to ensure that the utility vehicle is only controlled by authorized personnel.

In various examples, the control of the utility vehicle may be restricted, e.g., to avoid an erroneous or malicious takeover of the utility vehicle. Therefore, the proposed concept may include a component to determine an authorization of the person with respect to the controlling of the utility vehicle. For example, a person tasked with controlling the utility vehicle may be authorized to instruct the utility vehicle to perform any command, while other persons might have no authorization or might only have authorization to stop the utility vehicle (or the engine of the utility vehicle), but not to instruct the utility vehicle to move. In other words, the one or more processors may be configured to determine a level of authorization of the person, and to control the utility vehicle if the person has sufficient authorization to control the utility vehicle. For example, based on the level of authorization, the one or more processors may issue some commands, while other commands may be blocked. In other words, different levels of authorization may allow different commands to be issued.

To restrict the control of the utility vehicle, two general approaches may be chosen. One, the person shown in the video data may be identified or re-identified, and the utility vehicle may be controlled if the person being identifier or re-identified is authorized to control the utility vehicle, e.g., as the person is registered as operator or "marshaller" of the utility vehicle. Accordingly, the one or more processors may be configured to identify or re-identify the person, and to control the utility vehicle based on the identification or re-identification of the person, e.g., if the person is identified or re-identified as being authorized to control the utility vehicle. For example, the one or more processors may be configured to determine the level of authorization of the person based on the identity or re-identification of the person. For example, the one or more processors may be configured to look up the level of authorization of the person in a database, e.g. based on the identity of re-identification of the person.

Two, the person may carry special equipment that is exclusive to persons being authorized to control the vehicle. For example, similar to above, the one or more processors may be configured to detect whether the person carries a pre-defined item, such as a (hand-held) signaling beacon and/or a safety vest, and to control the utility vehicle (only) if the person carries the pre-defined item. For example, only persons carrying one or two (handheld) safety beacons and a safety vest might be authorized to control the utility vehicle. As mentioned above, a signaling beacon may reveal the bearer to be authorized to control the utility vehicle (e.g., any command of the vehicle). In this case, the pose-detection may be tailored to persons carrying signaling beacons. In other words, the machine-learning model may be trained to generate pose-estimation data of a person carrying at least one signal beacon based on video data. For example, the signaling beacon may be seen as another limb of the pose-estimation skeleton.

A safety vest may reveal the bearer to be authorized to perform a subset of commands, e.g., to stop the utility vehicle or to stop an engine of the utility vehicle. But also other external identifiers, such as a visual identifier or an active beacon may be used to determine the level of authorization of the person wearing or carrying the external identifier. In other words, the one or more processors may be configured to determine the level of authorization of the person based on an external identifier that is carried or worn by the person.

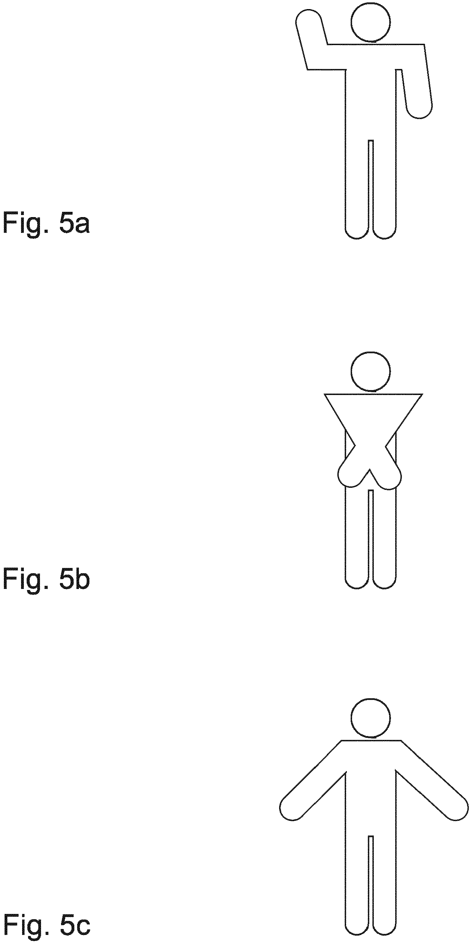

There are a variety of possible poses and signals that can be used to control the utility vehicle. For example, the signal of straightening the arm and facing the palm of the hand against the camera (shown in Fig. 5a) may be interpreted as an instruction to stop the vehicle from moving further towards the person. Similarly, crossing the arms in front of the body (as shown in Fig. 5b) may shut down the machine entirely in the case of an emergency. Visual body movement signals similar to those used by aircraft marshallers may be used for a more fine-grained control of the utility vehicle.

To improve the safety of the proposed concept, ambiguity may be removed. This may be done by having a fixed set of possible poses, and a fixed set of control instructions that is each associated with one of the poses of the set. In other words, the one or more processors may be configured to detect at least one of a plurality of pre-defined poses (i.e., the fixed set of poses). Correspondingly, the method may comprise detecting 130 at least one pre-defined pose based on the pose information of the person. Each pose of the plurality of pre-defined poses may be associated with a specific control instruction for controlling the utility vehicle. In other words, there may be a one-to-one relationship between the poses of the plurality of pre-defined poses and the corresponding control instructions. The one or more processors may be configured to control the utility vehicle based on the control instruction associated with the detected pose. Correspondingly, the method may comprise controlling 190 the utility vehicle based on the detected at least one pre-defined pose. In other words, when a pose of the plurality of pre-defined poses is detected, the associated control instruction may be used to control the utility vehicle. For example, the one or more processors may be configured to generate a control signal for controlling the utility vehicle based on the detected pose, e.g., based on the control instruction associated with the detected pose.

As mentioned above, the pose-estimation data may comprise a so-called pose-estimation skeleton, which comprises a plurality of joints and a plurality of limbs. Each of the plurality of pre-defined poses may result in a specific angle between some of the limbs of the skeleton. For example, an angle of 60 to 120 degrees between the right upper arm and the right lower arm may be indicative of the pose shown in Fig. 5a. The respective characteristic angles of the plurality of pre-defined poses may be stored in a database. The one or more processors may be configured to compare the angles of the pose-estimation skeleton generated by the pose-estimation machine-learning model with the characteristic angles of the plurality of pre-defined poses that are stored in the database, and to detect the at least one pre-defined pose based on the comparison. Alternatively, machine-learning may be used to detect the at least one pre-defined pose of the plurality of pre-defined poses.

As has been outlined above, not only static poses may be identified using the pose-estimation machine-learning model, but also the progress of the pose may be determined. For example, the progress of the pose may be used to identify poses that comprise a movement over time, so-called signal poses, in contrast to static poses which do not comprise an element of movement. In other words, the plurality of pre-defined poses comprises one or more static poses and one or more signal poses, with the one or more signal poses being based on a transition from a first pose to a second pose. The one or more processors may be configured to detect the at least one pre-defined pose based on the information about the progress of the pose. Accordingly, the one or more processors may be configured to detect the at least one pre-defined signal pose based on the information on the progress of the pose. For example, as the at least one pre-defined signal being is based on a transition from a first pose to a second pose, the at least one pre-defined signal pose may be detected by comparing the angles of the pose to the characteristic angles of the first and second pose stored in the database.

In connection with Figs. 5a to 5h, various examples of poses and associated control instructions are given. Figs. 5a to 5h show schematic diagrams of examples of static poses or signal poses. For example, as shown in Fig. 5a, the plurality of pre-defined poses may comprise a static pose associated with a control instruction for halting a movement of the utility vehicle. As explained above, Fig. 5a shows the marshaller holding up the right hand towards the utility vehicle. Consequently, an angle of 60 to 120 degrees between the right upper arm and the right lower arm may be indicative of the pose shown in Fig. 5a, i.e., the static pose associated with a control instruction for halting a movement of the utility vehicle.

For example, as shown in Fig. 5b, the plurality of pre-defined poses may comprise a static pose associated with a control instruction for stopping an engine of the utility vehicle. In Fig. 5b, the arms of the marshaller are crossed in front of the body, resulting in a characteristic angle of approximately negative 45 degrees between the "shoulder limb" and the upper arms of the marshaller.

As shown in Fig. 5c, the plurality of pre-defined poses may comprise a static pose associated with a control instruction for starting an engine of the utility vehicle. For example, the arms of the marshaller may be stretched diagonally outwards towards the floor in this example of the static pose associated with the control instruction for starting the engine of the utility vehicle.

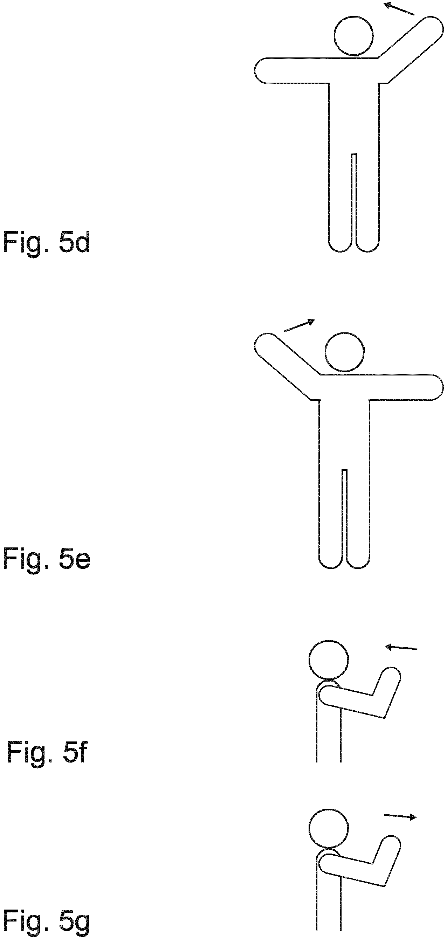

In Figs. 5d to 5g, several signal poses are shown. For example, the plurality of pre-defined poses may comprise a signal pose associated with a control instruction for adjusting a steering angle of the utility vehicle to the left (Fig. 5d) and/or a signal pose associated with a control instruction for adjusting a steering angle of the utility vehicle to the right (Fig. 5e). As shown in Fig. 5d, the signal pose associated with the control instruction for adjusting the steering angle of the utility vehicle to the left may be based on a first pose where the right arm is stretched straight outwards and the left arm is stretched diagonally outwards towards the sky and a second pose where the right arm remains stretched straight outwards and the left arm is stretched diagonally inwards to the sky. In the corresponding signal pose for adjusting a steering angle of the utility vehicle to the right, the roles of the arms may be reversed.

For example, the plurality of pre-defined poses may comprise a signal pose associated with a control instruction for controlling the utility vehicle to move backward (Fig. 5f), and a signal pose associated with a control instruction for controlling the utility vehicle to move backward (Fig. 5g). As shown in Fig. 5g, the signal pose associated with a control instruction for controlling the utility vehicle to move backward may comprise a first pose, in which the right lower arm is at an angle of about 75 to 105 degrees relative to the right upper arm and stretched towards the sky, and a second pose, in which the right lower arm is tilted forwards, resulting in an angle of about 115 to 150 degrees relative to the right upper arm. In Fig. 5f, instead of tilting the lower arm forwards, the lower arm is tilted backwards.

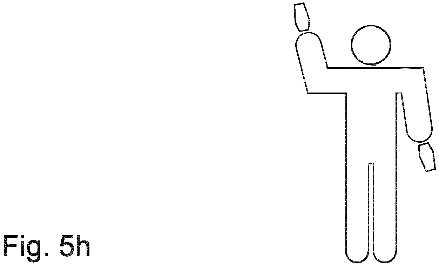

In Fig. 5h, a signal pose that is executed using two signaling beacons is shown. As outlined above, the pose-estimation machine-learning model may be trained to output the pose-estimation data for persons carrying one or two signaling beacons. In this case, the signaling beacon(s) may be treated as additional limb(s) of the pose-estimation skeleton.

At least some examples of the present disclosure are based on using a machine-learning model or machine-learning algorithm. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g., by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In various examples introduced above, various machine-learning models are being used, e.g., a pose-estimation machine-learning model, a machine-learning model being used for segmenting pose-estimation data of multiple persons shown in the video data, an object-detection machine-learning model, a facial recognition machine-learning model, or a person re-identification machine-learning model. For example, these machine-learning models may be trained using various techniques, as shown in the following.

For example, the pose-estimation machine-learning model may be trained using supervised learning. For example, video data may be used as training samples of the training, and corresponding pose-estimation data, e.g., the points of the pose-estimation skeleton in a two-dimensional or three-dimensional coordinate system, may be used as desired output. Alternatively, reinforcement learning may be used, with a reward function that seeks to minimize the deviation of the generated pose-estimation data from the actual poses shown in the video data being used for training.

For example, the machine-learning model being used for segmenting pose-estimation data of multiple persons shown in the video data may be trained using unsupervised leaning, as the segmentation can be performed using clustering. Alternatively, supervised learning may be used, with video data showing multiple persons being used as training samples and corresponding segmented pose-estimation data being used as desired output.

The object-detection machine-learning model may be trained using supervised learning, by providing images comprising the objects to be detected as training samples and the positions of the objects to be detected as desired output of the training.

The machine-learning model or models being used for facial recognition may also be trained using supervised learning, e.g., by training the machine-learning model to detect faces within the video data and to output corresponding positions to be used for a rectangular bounding box, with frames of the video data being provided as training samples and the corresponding positions of the bounding boxes being provided as desired training output. Feature extraction is a classification problem, so a classification algorithm may be applied. Alternatively, as outlined above, the facial recognition can be implemented using a person re-identification machine-learning model.

The person re-identification machine-learning model may be trained using a triplet-loss based training, for example. In triplet loss, a baseline input is compared to a positive input and a negative input. For each set of inputs being used for training the person re-identification machine-learning model, two samples showing the same person may be used as baseline input and positive input, and a sample from a different person may be used as negative input of the triplet loss-based training. However, the training of the person re-identification machine-learning model may alternatively be based on other supervised learning-, unsupervised learning- or reinforcement learning algorithms. For example, Ye et al: "Deep Learning for Person Re-identification: A Survey and Outlook" (2020) provides examples for machine learning-based re-identification systems, with corresponding training methodologies.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), prefer-ably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The at least one interface 12 introduced in connection with Fig. 1a, may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information. For example, the one or more processors 14 introduced in connection with Fig. 1a may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general-purpose processor, a Digital Signal Processor (DSP), a micro-controller, etc. In some examples, the one or more processors may be or comprise one or more reconfigurable hardware elements, such as a Field-Programmable Gate Array (FPGA). For example, the one or more storage devices 16 introduced in connection with Fig. 1a may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for a utility vehicle (100; 300; 310), the apparatus comprising:
at least one interface (12) for obtaining video data from one or more cameras (102) of the utility vehicle;
one or more processors (14) configured to:
identify or re-identify one or more persons shown in the video data,
determine an infraction of the one or more persons (410) on one or more safety areas (400) surrounding the utility vehicle based on the identification or re-identification of the one or more persons shown in the video data, and
provide at least one signal indicating the infraction of the behavior of the one or more persons on the one or more safety areas to an output device.

2. The apparatus according to claim 1, wherein the one or more processors are configured to identify the one or more persons using facial recognition on the video data,
or wherein the one or more processors are configured to re-identify the one or more persons using a machine-learning model that is trained for person re-identification.

3. The apparatus according to one of the claims 1 or 2, wherein the one or more processors are configured to identify the one or more persons by detecting a visual identifier carried by the one or more persons in the video data,
and/or wherein the one or more processors are configured to identify the one or more persons by detecting an active beacon carried by the one or more persons.

4. The apparatus according to one of the claims 1 to 3, wherein the one or more processors are configured to process, using a machine-learning model, the video data to determine pose information of one or more persons being shown in the video data, the machine-learning model being trained to generate pose-estimation data based on video data, and to determine the infraction of the one or more persons on the one or more safety areas based on the pose information of the one or more persons being shown in the video data.

5. The apparatus according to claim 4, wherein the machine-learning model is trained to output the pose information with information about a progress of the pose of the one or more persons over time as shown over the course of a plurality of frames of the video data, wherein the one or more processors are configured to determine information on a predicted behavior of the one or more persons based on the progress of the pose of the one or more persons over time, and to determine the infraction of the one or more persons on the one or more safety areas based on the predicted behavior of the one or more persons.

6. The apparatus according to claim 5, wherein the one or more processors are configured to generate one or more polygonal bounding regions around the one or more persons based on the pose of the one or more persons, and to determine the infraction of the pose of the one or more persons on the one or more safety areas based on the generated one or more polygonal bounding regions.

7. The apparatus according to one of the claims 5 or 6, wherein the one or more processors are configured to determine inattentive or unsafe behavior of the one or more persons based on the progress of the pose of the one or more persons over time, and to determine the infraction of the one or more safety areas based on the determined inattentive or unsafe behavior.

8. The apparatus according to one of the claims 6 or 7, wherein the one or more processors are configured to estimate a path of the one or more persons relative to the one or more safety areas based on the progress of the pose of the one or more persons, and to determine the infraction on the one or more safety areas based on the estimated path of the one or more persons.

9. The apparatus according to one of the claims 1 to 8, wherein the one or more processors are configured to detect, using a machine-learning model, whether the one or more persons carry at least one of a plurality of pre-defined items, the machine-learning model being trained to detect the plurality of pre-defined items in the video data, the plurality of pre-defined items comprising one or more items of safety clothing and/or one or more prohibited items, and to determine the infraction of the one or more persons on the one or more safety areas further based on whether the one or more persons carry the at least one item.

10. The apparatus according to one of the claims 1 to 9, wherein the one or more processors are configured to determine a future path of the utility vehicle, and to determine an extent of the one or more safety areas based on the future path of the utility vehicle.

11. The apparatus according to one of the claims 1 to 10, wherein the at least one signal indicating the infraction of the one or more persons on the one or more safety areas comprises a display signal and/or an audio signal.

12. A utility vehicle (100; 300; 310) comprising the apparatus (10) according to one of the claims 1 to 11 and one or more cameras (102).

13. The utility vehicle according to claim 12, wherein the one or more cameras are arranged at the top of a cabin (104) of the utility vehicle, or wherein the one or more cameras are arranged at a platform (106) extending from the top of the cabin (104) of the utility vehicle.

14. A method for a utility vehicle, the method comprising:
obtaining (110) video data from one or more cameras of the utility vehicle;
identifying or re-identifying (160) one or more persons shown in the video data;
determining (170) an infraction of the one or more persons on one or more safety areas surrounding the utility vehicle based on the identification or re-identification of the one or more persons shown in the video data; and
providing (180) at least one signal indicating the infraction of the behavior of the one or more persons on the one or more safety areas to an output device.

15. A computer program having a program code for performing the method of claim 14, when the computer program is executed on a computer, a processor, processing circuitry, or a programmable hardware component.
